(19) Europäisches Patentamt
European Patent Office
Office européen des brevets

(11) **EP 4 095 186 A1**

(12) **EUROPEAN PATENT APPLICATION**

(43) Date of publication:
**30.11.2022 Bulletin 2022/48**

(21) Application number: **22174906.2**

(22) Date of filing: **23.05.2022**

(51) International Patent Classification (IPC):
**C08J 9/16** (2006.01)      **C08J 9/232** (2006.01)
**B29C 44/30** (2006.01)

(52) Cooperative Patent Classification (CPC):
**C08J 9/16; B29C 44/3461; C08J 9/232;**
B29C 44/50; B29K 2105/048; C08J 2201/03;
C08J 2325/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.05.2021 EP 21175773**

(71) Applicant: **Storopack Hans Reichenecker GmbH
72555 Metzingen (DE)**

(72) Inventors:
• **Mahé, Anthony
44860 Pont-Saint-Martin (FR)**
• **Alvarado, Monica
44000 Nantes (FR)**

(74) Representative: **DREISS Patentanwälte PartG
mbB
Friedrichstraße 6
70174 Stuttgart (DE)**

(54) **PRODUCT MADE OF EXPANDED POLYSTYRENE MATERIAL**

(57)      A product made of an expanded polystyrene material, the material made of extruded expanded polystyrene beads, characterized in that an isoperimetric quotient of the expanded polystyrene beads in the material of the product is lower than approx. 0,86.

Processed by Luminess, 75001 PARIS (FR)

**Description**

The invention relates to a product made of an expanded polystyrene material according to the preamble of claim 1.

It is known to produce a product made of an expanded plastic material in a form mold. For this, expandable plastic particles, for example made of polystyrene and including an expanding or foaming agent like pentane, are filled in a mold cavity, and thereafter the mold cavity is filled with hot steam. This causes the plastic particles to expand and to adhere to each other, thereby resulting in a unitary solid foam product. Such foam products are used for example as cushioning elements for shipping an item in a container, or for example in the automotive industry as part of shock absorbers.

The expandable plastic particles are manufactured by introducing a bulk plastic material into an extrusion device, supplying temperature, pressure and the expansion agent, extruding the mixture of plastic material and expansion agent into a string type intermediate product, and cooling and cutting the string type intermediate product into said expandable particles. Related art is for example EP 2 241 590 B1. Furthermore, reference is made to EP 3 825 353 A1.

Expanded Polystyrene ("EPS") products are made from expanded sphere shapes beads to facilitate the mold filling (it is to be noted that the terms "particles" and "beads" are used synonymously hereinafter). This sphere shape improves the flow of the material, but it has shown that it is not the best solution to obtain a good cohesion of the material. Indeed, with a sphere shape the bonding surface between each beads is reduced. After molding, the sphere shape beads get a shape like a hexagon, because each bead expands in the mold and penetrates into the voids between each other. In case of rupture of a product made of expanded polystyrene, the rupture occurs at the junction between adjacent beads rather than in the beads volume. The lower limit of the isoperimetric quotient of this type of prior art material can theoretically be 0,8 due to the rather regular pentagon shape of the expanded beads. In practice, however, the lowest values of isoperimetric quotients which have been observed are in the range of 0,9 or higher because in practice the expanded beads are more spherical than pentagonal.

Objective of the present decade is to develop circular economy with recycling. Main problem of recycling is that material is damaged cycle after cycle decreasing the performance of the material. This phenomenon is also observed on recycled expanded polystyrene where the global mechanical performances can decrease by 10-20%.
It is thus desirable to provide an improved product made of expanded polystyrene material.

This object is achieved by a product made of expanded polystyrene material with the features of claim 1.

The invention proposes a way to increase the surface of bonding between each bead and furthermore to create mechanical anchorage between each other. Even if the shape of the beads on the molded part is not spherical (or hexagon), the shape is close to a sphere when filling the mold during expansion. More specifically, the expandable particle is expanded in a pre-expander, which results in a shape close to a sphere. This sphere is used to fill the mold. When a final expansion occurs in the mold, anchorage between beads is created.

In order to obtain this effect, the cylindrically shaped polystyrene beads used for manufacturing the product by molding are manufactured by extrusion. It is to be understood that the term "expandable" means that the volume of the polystyrene beads increases under specific conditions by developing micro-cavities. Or, in other words: the rather solid expandable polystyrene beads transform into a foam type plastic material.

The plastic beads are manufactured by introducing a bulk plastic material into an extrusion device. The term "bulk plastic material" in the present context is to be understood in a broad sense incorporating also for example powder, pellets and granulate and the like. Manufacturing the expandable polystyrene particles includes supplying temperature and a shearing action provided by a screw rotation of the extrusion device such that a melt is formed, and supplying an expansion or "foaming" agent, and extruding the melted mixture of plastic material and expansion agent into an endless string or "spaghetti" type intermediate product.

The string type intermediate product is stretched in its lengthwise direction prior to and/or during cooling it down. By doing so, the polymer strings are stretched which gives them an essentially parallel orientation in lengthwise direction of the string type intermediate product. Cooling during and/or after stretching fixes the polymer strings in their essentially parallel state. Thereafter, the stretched and cooled string type intermediate product is cut into string portions forming the expandable polystyrene particles.

The extruded expandable polystyrene particles have specific material properties during expansion, that is an asymmetrical expansion characteristic. This allows to use the polystyrene particles for applications and for manufacturing foam products different than the prior art. Furthermore, the specific orientation of the polymer strings provides excellent expansion and material characteristics even when recycled bulk plastic material is used as the basic material ("raw material") for the production of the extruded expandable plastic particles.

As a result, an isoperimetric quotient of the expanded polystyrene material in the molded product is lower than approx. 0,86, preferably lower than approximately 0,70. The lower the isoperimetric quotient is, the better the mechanical properties of the material are. This is considerably lower than the isoperimetric quotient which can be obtained in practice with normal EPS and its spherical and uniformly expanding beads.

The expandable polystyrene particles may have a shape with a longitudinal axis, and an expansion characteristic of the plastic particles may be such that during expansion a dimension of the particles transverse to the longitudinal axis increases at least five times more than a dimension of the particles parallel to the longitudinal axis. The polystyrene particles therefore may have very distinct asymmetrical expansion properties, which allows for new material characteristics and visual effects at the finished molded and foamed product.

Preferably, the cylindrical shaped polystyrene beads expand mainly in their radial direction. To fill the mold, they preferably expand such that they become almost round or sphere type shaped, if not to say as round as possible.

After filling the mold, steam is applied and then the cylindrical polystyrene beads expand again filling the voids, these voids being more irregular than in the prior art with sphere shape beads. Additionally, the expansion mainly in radial direction provides an improved and increased anchoring between adjacent polystyrene beads creating a high cohesion in the structure.

To obtain the improved cohesion between the beads in the final product and thus the improved material property of the final product, a minimum bonding surface between beads is required. This can be quantified by the so-called isoperimetric quotient. The isoperimetric quotient used as a reference is a dimensionless quantity obtained using volume V and surface area S of the expanded spherically shaped polystyrene beads in the product. The isoperimetric quotient can be calculated according to each of the following formulas:

$$Q \equiv \frac{r_V^2}{r_S^3}$$
$$= \frac{\left(\frac{3}{4\pi} V\right)^2}{\left(\frac{1}{4\pi} S\right)^3}$$
$$= \frac{36\pi V^2}{S^3}.$$

wherein $r_V$ is the radius corresponding to the volume V of the bead if it was a perfect sphere, and wherein $r_S$ is the radius corresponding to the surface S of the bead if it was a perfect sphere.

In the non-expanded state, the expandable polystyrene particles or beads, respectively, may have a ratio of the dimension parallel to the longitudinal axis to the dimension transverse to the longitudinal axis of approx. 1 to approx. 10. If the ratio is approximately 1, the particles are rather spherical, if the ratio is approximately 10, the particles are rather elongated, if not to say cylindrical. The indicated range of ratios provides, together with the asymmetrical expansion properties, for unique and new material properties of the finished molded foam product.

In the non-expanded state, the expandable polystyrene particles have a dimension parallel to the longitudinal axis in the range of approx. 1-8 mm and/or a dimension transverse to the longitudinal axis in the range of approx. 0,5-1,5 mm. These dimensions have been proven to allow for an easy and reliable extrusion.

A method for producing a plurality of expandable polystyrene particles for producing a product made of an expanded polystyrene material is provided, the method comprising the following steps: a. providing a bulk polystyrene material to an inlet of an extrusion device; b. moving the bulk polystyrene material in an extrusion direction; c. heating the bulk polystyrene material while moving it in the extrusion direction such that it forms a polystyrene melt; d. introducing an expansion agent into the polystyrene melt while moving it in the extrusion direction; e. extruding the mixture of polystyrene melt and expansion agent through an extrusion die having at least one opening such that a string type intermediate product is obtained; f. stretching the string type intermediate product in its lengthwise direction; g. during and/or after stretching: cooling the string type intermediate product; h. cutting the cooled string type intermediate product into string portions forming the expandable polystyrene particles. With this method, expandable polystyrene particles may be produced even on the basis of recycled bulk polystyrene material having good and asymmetrical expansion characteristics allowing the production of specific and new molded foam products.

A transverse dimension of the string type intermediate product may be in the range of approx. 0,5-1,5 mm. The indicated values allow for an easy and reliable extrusion.

During the stretching step, a transverse dimension of the of string type intermediate product may decrease by approx. 50%. Such a degree of stretching provides for a sufficiently low degree of orientation of the polymer strings such that the above mentioned distinct asymmetrical expansion properties can be achieved.

During moving the polystyrene melt in the extrusion direction, a nucleating agent, preferably talcum, may be added. This helps to provide a specific and required porosity of the polystyrene particles after expansion.

The at least one opening in the extrusion die may have a circular shape, an S-shape, a star shape, an L-shape, or an I-shape. Together with the asymmetrical expansion properties, new shapes of the expanded polystyrene particles may be achieved, and therefore new material properties and new visual appearances of the finished molded foam product may be obtained.

A mixture of bulk polystyrene materials of different origins may be used. This provides for uniform material properties in different manufacturing batches, since a variety of different molecules is used.

Other aspects and advantages of the invention will become apparent from the following description, taken in conjunction with the accompanying drawings, illustrating by way of example the principles of the invention. In the drawing is shown in

Figure 1          a schematic representation of an extrusion device for producing a plurality of expandable plastic particles;

Figure 2          a side view of a plastic particle produced by the extrusion device of figure 1 before and after expansion;

Figure 3          a front view of the plastic particle of figure 2 before and after expansion;

Figure 4          an enlarged section of the plastic particle of figures 2 and 3 after expansion;

Figure 5          a flowchart of a method for producing a plurality of the expandable plastic particles of figures to 2-4;

Figure 6          a schematic 3D representation of an X-ray radiography setup;

Figure 7          a block diagram of X-ray radiography;

Figure 8          a 3D representation of the arrangement of the test sample;

Figure 9          a 3D representation of the test setup;

Figure 10         an enlarged schematic perspective view of a part of the test setup of figure 9;

Figure 11         a sectional view of an expanded bead in a sample of the test setup of figures 6-10 represented by a plurality of X-ray slices;

Figure 12         a representation of an X-ray slice of figure 11;

Figure 13         another representation of an idealized spherical bead together with a schematic representation of X-ray slices according to the test setup of figures 6-10;

Figures 14-18    screenshots taken during use of the assessment program IMAGE J; and

Figure 19         an image representing beads having enclosed cavities.

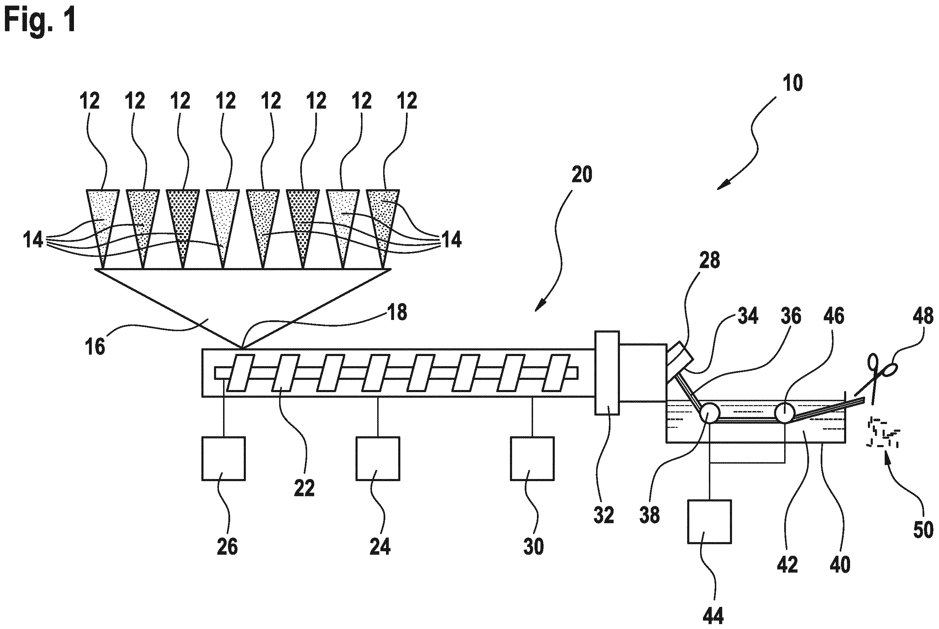

A production device for producing extruded expandable plastic particles in figure 1 is generally designated with reference numeral 10. It comprises a plurality of hoppers 12 being filled with different bulk plastic materials, e.g. powder-type plastic materials 14, that is each hopper 12 is filled with one specific bulk plastic material 14. "Different" in the present context means that the bulk plastic materials 14 have different origins, for example, from different plants and/or are provided using different methods. The bulk plastic materials 14, for example, may all be provided by recycling products made of plastic, such as molded foam parts used as cushioning or shock-absorbing means or yoghurt Polystyrene cups coming from waste sorting centers. However, it is also possible that only some of the bulk plastic materials 14 are provided by recycling, and some are provided as new and non-recycled material.

Recycling molded foam parts may include compressing the foam parts and, thereafter, grinding or milling the compressed foam parts in order to obtain the bulk plastic material, e.g. in the form of powder-type plastic material 14. An extrusion step may be added in order to obtain granulates or pellets, which may be easier to use than then a powder-type plastic material in its classic sense. The recycling method may also include a cleaning step which removes at least larger impurities. It is also to be understood that the bulk plastic material 14 may comprise very small powder-type particles, but also may comprise additionally or solely pellet-type or granulate-type particles or the like.

The bulk plastic material 14 may comprise polystyrene and/or polyolefin and/or polylactide and/or polyamide and/or polycarbonate. However, polystyrene is preferred, and it is preferred that the bulk plastic material comprises only one single type of plastic material.

In the presently shown exemplary embodiment, eight different hoppers 12 with eight different bulk plastic materials 14 are provided. The individual hoppers 12 supply the bulk plastic materials to a common hopper 16, in which the different bulk plastic materials 14 are pre-mixed. The common hopper 16 supplies the pre-mixed bulk plastic materials 14 to an inlet 18 of an extrusion device 20.

By way of example, the extrusion device 20 is a device having an extrusion screw 22. However, it is to be understood that also a multiple-stage extrusion device may be used.

The extrusion device 20 comprises heating means 24 and drive means 26. The drive means 26 actuate the extrusion screw 22 in order to rotate and to move the bulk plastic material 14 from the inlet 18 to an outlet 28. The heating means 24 and the shearing action caused by the rotation of the extrusion screw 22 raises the temperature of the bulk plastic material 14 during its movement through the extrusion device 20 such that on its way the bulk plastic material 14 is transformed into a plastic melt in the form of a rather compact paste. The temperature may reach up to 200°C.

Prior to the outlet 28, the extrusion device 20 comprises expansion agent injection means 30, which inject an expansion agent, which may also be called "foaming agent", into the plastic melt. The expansion agent may be pentane, and the ratio by mass of pentane to plastic melt after injection may be about 5%.

At the outlet 28 the temperature may be in the range of approximately 110°C. During movement through the extrusion device 20 close to the outlet 28 the pressure increases, since the density of the plastic melt increases and its viscosity decreases.

Immediately before the outlet 28, a filter means 32 is arranged in order to remove impurities from the plastic melt. The filter means 32 may be a metal disk having a multitude of small holes. It is to be understood that the filter means 32 is not intended to remove any impurity, but rather may allow a certain quantity of smaller impurities to remain in the plastic melt. It is even possible that, when the plastic melt is moved to the outlet 28, a nucleating agent, preferably talcum, is added. In a non-shown embodiment there might be more than two filters. However, even if there are multiple filters, a certain quantity of smaller impurities will remain in the plastic melt.

At the outlet 28 of the extrusion device 20, an extrusion die 34 is provided having a plurality of openings (not shown) such that a plurality of endless string or spaghetti type intermediate products 36 is obtained. The openings in the extrusion die 34 may have a circular shape, an S-shape, a star shape, an L-shape, and/or an I-shape. Accordingly, the string type intermediate products 36 may have a circular shape, an S-shape, a star shape, an L-shape, and/or an I-shape cross section. It is possible that all openings of the extrusion die 34 are identical, but also different types of openings and also different sizes of openings may be provided. Preferably, a transverse dimension of the string type intermediate product 36 is in the range of approximately 0,5 to 1,5 mm.

After the string type intermediate products 36 have left the extrusion die 34, they slightly cool down by the environmental air, and they are received by a first driven roller 38 which is, by way of example, in the embodiment shown in figure 1 submerged in a tank 40 filled with a cooling liquid, such as water 42. A drive of the first driven roller 38 is indicated by reference numeral 44. The string type intermediate products 36 are fed from the first driven roller 38 to a second driven roller 46 which is similarly submerged in the tank 40 and which is also driven by drive 44.

From the second driven roller 46 and the tank 40 the string type intermediate products 36 are fed to a cutting assembly 48 which cuts the string type intermediate products 36 into string portions 50 forming the expandable plastic particles. Cutting may occur, as shown in figure 1, after the string type intermediate products 36 have left the water 42 in the tank 40. However, it is also possible in a non-shown embodiment that cutting takes place within the water tank, that is at the string type intermediate products being submerged in the water.

The rotational speeds of the first driven roller 38 and the second driven roller 60 are equal to each other but slightly higher than the exit speed of the string type intermediate products 36 when they exit the extrusion die 34. By consequence, the string type intermediate products 36 are stretched between the extrusion die 34 and the first driven roller 38 in their lengthwise direction. In the present preferred embodiment, most or even all of the stretching is completed prior to cooling. During this stretching step, a transverse dimension of the string type intermediate products 36 decreases preferably by approximately 50%.

With the production device 10 shown in figure 1, extruded expandable plastic particles 50 are manufactured which can be used for producing a foam product made of an expanded plastic material. Such a product is typically produced by expanding the extruded expandable plastic particles 50 in a preexpander introducing hot steam into the preexpander. After aging, the expanded plastic particles 50 are filled into a mold cavity and hot steam is introduced into the mold cavity. The hot steam makes the pentane remaining in the extruded expandable plastic particles 50 to expand, such that the extruded expandable plastic particles 50 further migrate into a still further foamed condition and such that the extruded expanded plastic particles can adhere to each other during molding (the adhesion between particles is obtained by introducing hot steam which has the effect to increase the temperature of plastic and create a further expansion of the particles; normally, this second expansion is weaker than the first expansion in the preexpander).

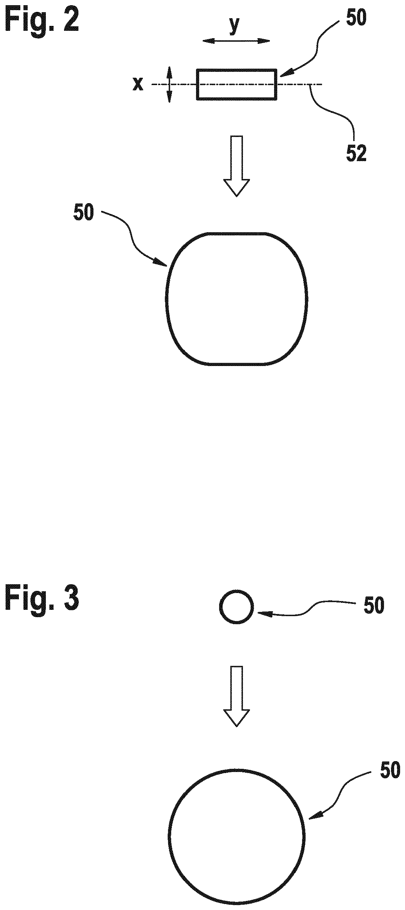

As can be seen from figures 2 and 3, the extruded expandable plastic particles 50 have asymmetrical expansion properties. In figures 2 and 3, by way of example, the extruded expandable plastic particle 50 has a cylindrical shape with a longitudinal axis 52. The expansion characteristic of the extruded expandable plastic particle 50 is such that during expansion the dimension of the particle 50 transverse to the longitudinal axis 52 increases at least five times more than the dimension of the extruded expandable plastic particles 50 parallel to the longitudinal axis 52. This is provided by the above mentioned stretching step between the extrusion die 34 and the first driven roller 38, which leads to an orientation degree of 10% or less, preferably of 5% or less. Or, in other words: A majority of the polymer strings of the extruded expandable plastic particles 50 is arranged more or less parallel to the longitudinal axis 52.

The orientation degree is a well-known material property which can be measured using x-ray diffraction. A method for measuring the orientation degree is given for example in European patent EP 1 416 031 B1. An orientation degree of less than approximately 10% is equivalent to an intensity distribution variation less than 10% obtained by fixing a peak scattering angle and by varying the azimuth angle from 0 to 360°.

As can be seen from figure 2, the extruded expandable plastic particle 50, in the non-expanded state, has a ratio of the dimension y parallel to the longitudinal axis 52 to the dimension x transverse to the longitudinal axis 52 of approximately 2.5, which is well within the preferred range of 1-10. Furthermore, in the non-expanded state in the upper part of figures 2 and 3, the extruded expandable plastic particles 50 may have a dimension y parallel to the longitudinal axis 52 in the range of approx. 1-8 mm and/or a dimension x transverse to the longitudinal axis 52 in the range of approx. 0,5-1,5 mm.

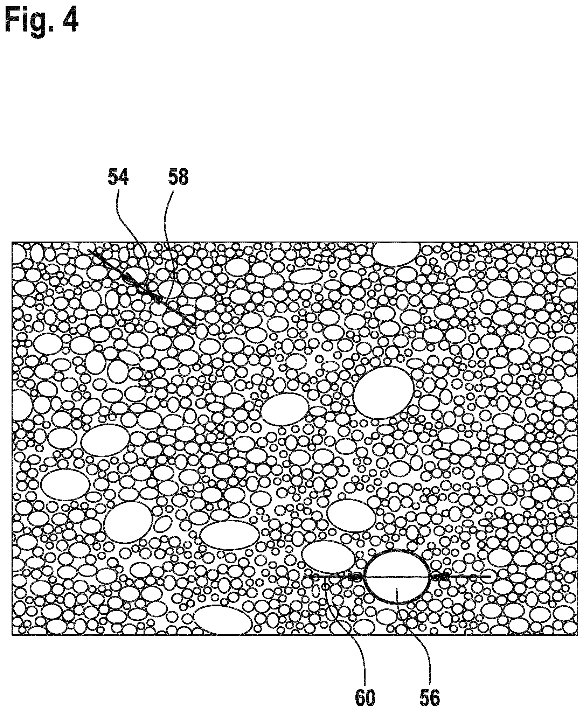

Figure 4 is an enlarged sectional view of an extruded expanded plastic particle 50 in a product, that is after expansion, as it is seen through a microscope. The expanded plastic particle 50 has two groups of micro-cavities 54 and 56, the first group of micro-cavities 54 having in the 2D-plane a first relatively small diameter D with a value 58 within a first diameter range, and the second group of micro-cavities 56 having in the 2D-plane a second relatively large diameter D having a value 60 within a second diameter range. The first diameter range and the second diameter range do not overlap. The average molecular weight of the extruded expanded plastic particle 50 ranges approximately from 130,000 to 190,000 g/mol.

In case that the micro-cavities 54 and 56 are not almost or exactly spherical, the diameter D may be a maximum width $W_{max}$ of a micro-cavity 54, 56 in the viewed 2D-plane. It is to be noted that, for the sake of simplicity, the figure is drawn as if there would be an important amount of plastic material between each micro-cavity. In reality, it might be rather a thin film of plastic material between adjacent micro-cavities.

By way of example, in the present embodiment as shown in figure 4, the first diameter value 58 is approximately $75\mu m$ and the second diameter value 60 is approximately $400\mu m$. Both values are well within the preferred ranges, the first preferred diameter range ranging approximately from 50 to $100\mu m$ and the second preferred diameter range ranging approximately from 100 to $1000\mu m$. An isoperimetric quotient of the expanded polystyrene material shown in figure 4 is 0,86 or below. A test method for determining the isoperimetric quotient is described in detail further below.

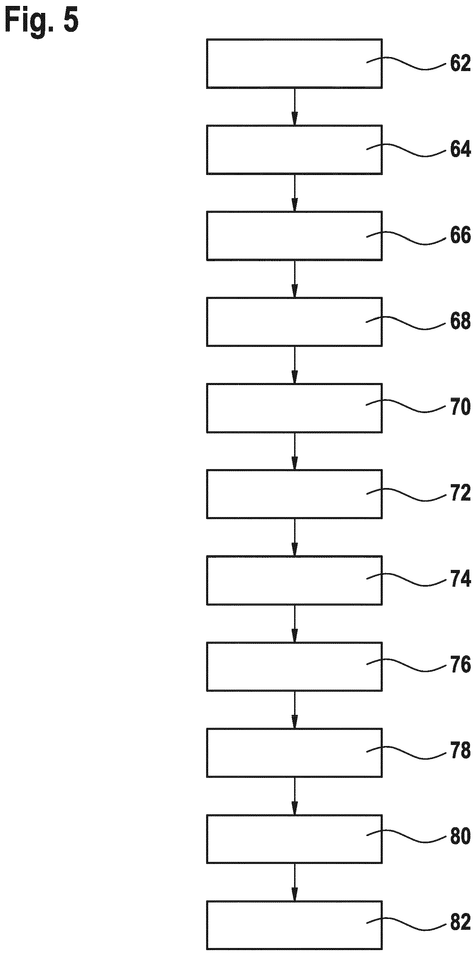

A method for producing the plurality of expandable plastic particles 50 is now explained referring to figure 5. The method starts in block 62. In block 64, the bulk plastic material 14 is provided to the inlet 18 of the extrusion device 20. In block 66, the bulk plastic material 14 is moved in an extrusion direction, which is defined by the longitudinal axis of the extrusion screw 22.

In block 68, the bulk plastic material 14 is heated by heating means 24 while moving it in the extrusion direction such that it forms a plastic melt. Block 70 represents the addition of a nucleating agent, such as talcum, which might be introduced into the extrusion device 20 together with the bulk plastic materials 14. In block 72, an expansion agent, such as pentane, is introduced by means of the expansion agent injection means 30 into the plastic melt while moving it in the extrusion direction.

In block 74, the mixture of plastic melt and expansion agent is extruded through the extrusion die 34 having a plurality of openings, such that the string type intermediate products 36 are obtained. In block 76, the string type intermediate products 36 are stretched in their lengthwise direction, as was explained above with reference to first driven roller 38. In block 78, the stretched string type intermediate products 36 are cooled. This cooling may occur during stretching and/or after stretching. Finally, in block 80, the cooled string type intermediate products 36 are cut by means of the cutting assembly 48 into the above mentioned string portions 50 forming the extruded expandable plastic particles. The method ends in block 82.

In the following, an exemplary method for obtaining the isoperimetric quotient of the expanded polystyrene material is described in detail:
For measuring the isoperimetric quotient, an X-ray measurement with a synchrotron generator was used. Measures were performed in the present exemplary embodiment by Novitom, 3 Avenue Doyen Louis Weil, F-38000 Grenoble, France.

A synchrotron is a particular type of cyclic particle accelerator, descended from the cyclotron, in which the accelerating particle beam travels around a fixed closed-loop path. The magnetic field which bends the particle beam into its closed path increases with time during the accelerating process, being synchronized to the increasing kinetic energy of the particles. The synchrotron is one of the first accelerator concepts to enable the construction of large-scale facilities, since bending, beam focusing and acceleration can be separated into different components. The most powerful modern particle accelerators use versions of the synchrotron design. The largest synchrotron-type accelerator, also the largest particle accelerator in the world, is the 27-kilometre-circumference (17 mi) Large Hadron Collider (LHC) near Geneva, Switzerland, built in 2008 by the European Organization for Nuclear Research (CERN). It can accelerate beams of protons to an energy of 6.5 teraelectronvolts (TeV). The big advantage of the synchrotron compared to a standard X-ray tube is that the X-ray beam is not conic but parallel so it is a lot more accurate, with a resolution below 1 $\mu$m.

In the present exemplary embodiment this CERN synchrotron and x-ray equipment installed in one of the laboratories were used.

CONTEXT

| Object of the request: | Material characterization |
|---|---|
| Purpose: | The purpose of this test is to determine the isoperimetric quotient of rEPS (recycled expanded polystyrene) material and to compare it to the isoperimetric quotient of a non-recycled EPS. The images needed for the analysis are obtained using X-Ray Microtomography technology. |

TEST SAMPLES

(1) A cube sample 84 of dimension 5x5x5 mm of rEPS (recycled EPS) was obtained from a molded part. Extrusion: Expandable cylindrical beads having a length of 1,5 mm and a diameter of 0,6 mm, production of the beads according to the above described method. The beads were extruded with a stretching of 1,8, and expansion occurred with 5% (weight percent) expandable agent. The beads were pre-expanded in a preexpander of the type Hirsch 1000 with 0,23 bars for 52s with a global cycle time of 84s. This process step transforms the expandable beads into pre-expanded beads. First, a tank of the preexpander is filled with expandable material, then steam pressure is applied for a certain time (52 seconds), and then the pre-expanded material is removed from the tank upon reaching the desired pre-expansion. The global cycle time comprises filling the tank, applying steam and removing the pre-expanded material from the tank.

Thereafter, the beads were aged for 18 hours in a silo. The part was molded in a molding machine of the type Kurtz K813, resulting in a rEPS vaulted part. Molding occurred with a cross steam pressure of 0,5 bars applied for a total of 10 seconds, the steam being introduced both on the mobile side and the fixed side. Thereafter, 40 seconds of stabilization time were applied. This stabilization time is related to the molding step. It is needed to stabilize the material in its molded shape for 40 seconds in order to avoid some swelling of the molded part after removing it from the mold. Cutting of a sample was performed at a distance of 5 mm from the surface of the molded part in order to avoid skin part effects (the measurement can only be made at a distance from the surface). Cutting was performed using a hot wire.

(2) For comparison, a similar cube sample 84 of dimension 5x5x5 mm of EPS (non-recycled EPS) was obtained from a molded part. Beads of the type EPS F395 BASF were used. The beads were pre-expanded in a preexpander of the type Hirsch 1000 with 0,29 bars for 50s with a global cycle time of 81s. Thereafter, the beads were aged for 19 hours in a silo. The part was molded in a molding machine of the type Kurtz K813, resulting in a EPS vaulted part. Molding occurred with a cross steam pressure of 0,65 bars applied for a total of 15 seconds, the steam being introduced both on the mobile side and the fixed side. Thereafter, 40 seconds of stabilization time were applied. Cutting of a sample was performed at a distance of 5 mm from the surface of the molded part in order to avoid skin part effects (the measurement can only be made at a distance from the surface). Cutting was performed using a hot wire.

CONDITIONNING OF THE SAMPLES

Prior to testing, the samples were conditioned for 24 hours at a temperature of 25°C $\pm$ 2°C and a relative humidity of 50% $\pm$ 5%.

DESCRIPTION OF THE TEST METHOD

X-RAY MICROTOMOGRAPHY

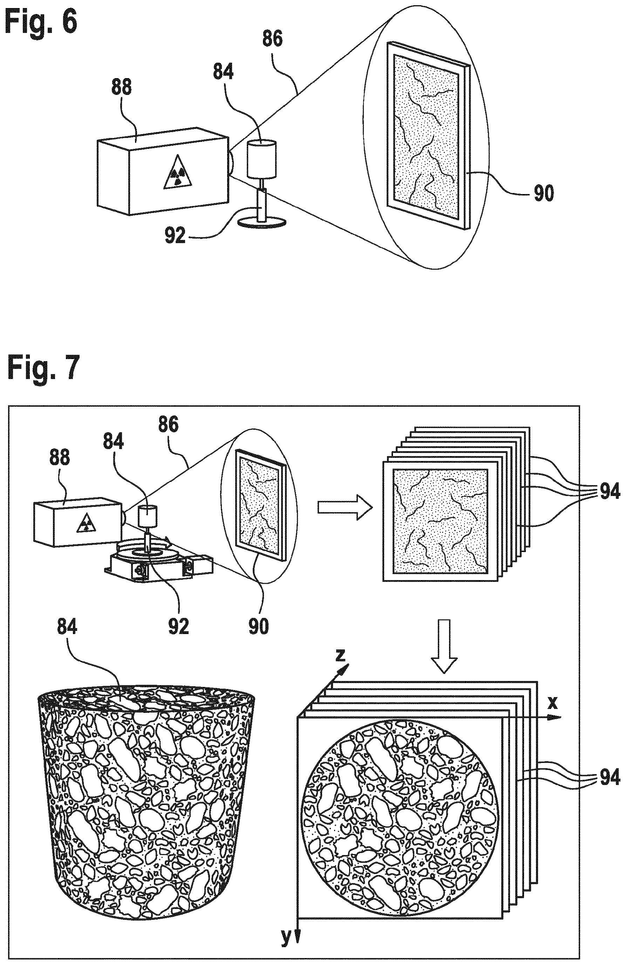

X-ray microtomography is a non-destructive testing technique that allows to generate a magnified 3D image of a sample. The general principles are shown in figures 6-10. Its operation is based on the same physical principles as the medical scanner, and it allows access to an improved spatial resolution. This technique involves acquiring a large number of radiographic projections of a sample from multiple angles to digitally reconstruct a 3D cartography of the phases that form the sample.

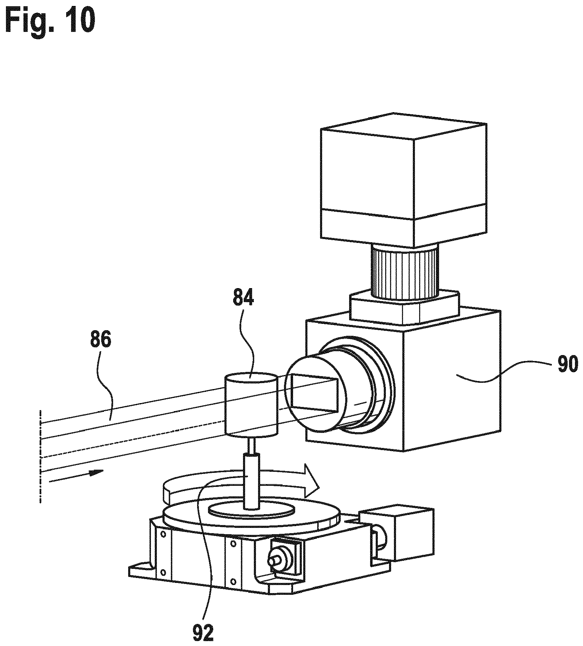

As can be seen from figures 6-10, X-ray radiography comprises to pass a sample 84 through an X-ray beam 86 created by an X-ray beam source 88 and to measure the spatial distribution of the intensity of the beam 86 at the exit of the sample 84 on a detector 90, see figures 6 and 7. It is to be noted that, while the beam 86 in figures 6 and 7 is shown as having a conic shape, it is particularly preferred that it is parallel, as explained further above, and as is shown in figure 10. It also can be seen from the figures that the test sample 84 is mounted on a rotatable support 92 which allows to rotate the test sample 84 about an axis which is orthogonal to a longitudinal axis (without reference sign) of the X-ray beam 86 in order to allow acquisition of a large number of radiographic 2D projections of the sample 84 from multiple angles.

X-rays used in radiography are energetic enough to pass through the thermoplastic materials. When an X-ray beam 86 passes through the sample 84, it is affected by various physical mechanisms that result in a decrease in its intensity until it exits the sample 84. This attenuation is proportional to the thickness and the attenuation coefficient of the phases which are crossed by the beam 86. Thus, each unit sensor of the detector 90 measures an intensity which depends on the material path crossed by the beam 86. These local intensity measurements are then digitized and converted to form a grayscale image, called radiography. This radiography corresponds to a 3-dimensional data matrix made up of elementary cubes, the so called "voxels". It can be viewed as a number of 2D scans 94, see figure 7, which represent grey-scale X-ray images of subsequent 2D-slices of the 3D test sample 84. This sectional plane can be generated with varying orientations.

ISOPERIMETRIC QUOTIENT

The isoperimetric quotient is defined as the dimensionless quantity obtained using the volume V and surface area S. It is used to assess the roundness or sphericity of a two-dimensional surface or a three-dimensional solid.

$$q_1 = 36.\pi.\frac{V^2}{S^3}$$

V = volume of the sphere
S = surface of the sphere

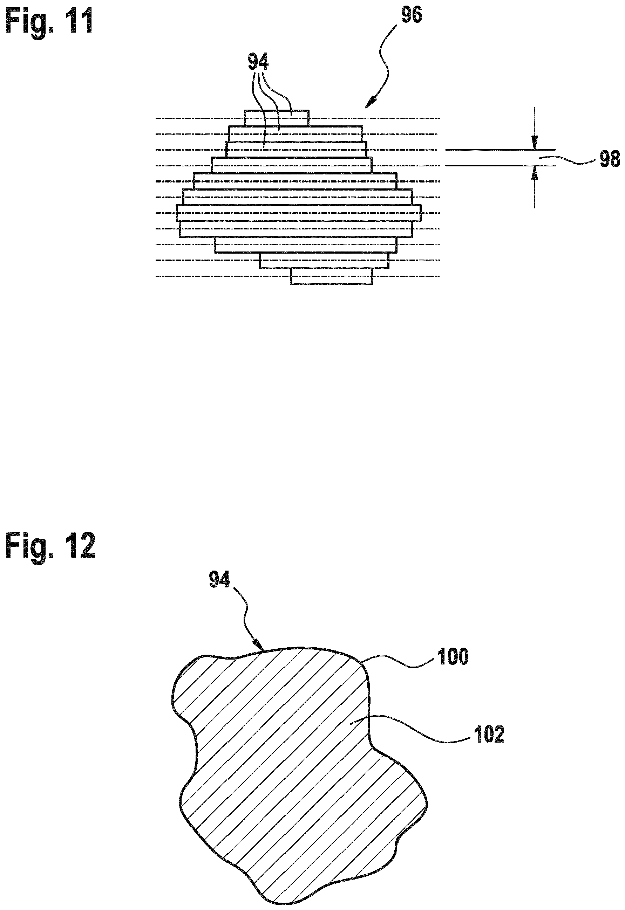

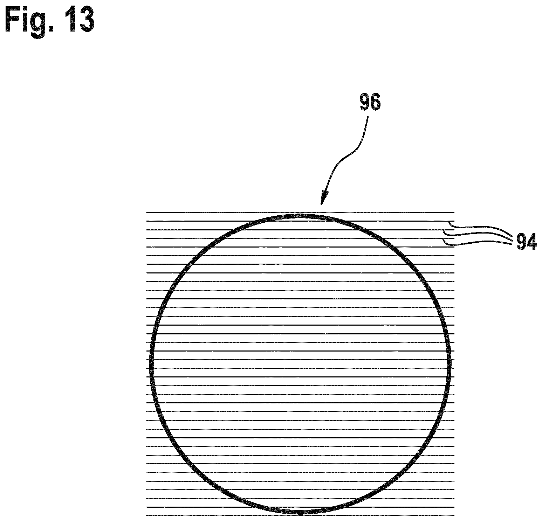

An isoperimetric quotient can be calculated in 2D or 3D. To be as accurate as possible, in the present exemplary embodiment it was calculated in 3D for at least one fully expanded and complete bead 96 of the test sample 84, see figures 11-13. However, even in 3D it is an approximation. The measurement comprises in the present exemplary embodiment to provide a 2D image for a "slice section" 94 (see figure 11) every 3 $\mu$m (distance 98), which after summation results in a very accurate representation of the volume V and the outer surface S of the bead 96. To represent a 3D bead 96 having a 3 mm maximum extension ("diameter") the present measurement will deliver 1000 2D images 94. In a 2D slice 94 of a bead 96 as shown in figure 12, a perimeter p of the bead slice 94 is denoted with 100, and a surface area A is denoted with 102.

It has been observed that it is not required to evaluate all these images to be able to characterize accurately a bead. It therefore was decided to use one image every 10 images ("slices"), which means that the distance between two scan images used for the evaluation is 30 $\mu$m. Or, in other words: A bead 96 having a maximum extension (diameter) of 3 mm can be represented by 100 2D-slices 94 of 30 $\mu$m thickness (reference numeral 98 in figure 11). For each slice 94, the surface area A and the perimeter p are determined and multiplied by the height d (reference numeral 98) of the slice 94, which in the present exemplary embodiment is 30 $\mu$m.

$$V_{3D-bead} = \Sigma V_i = \Sigma (A_i \times d_i)$$

$$S_{\text{3D-bead}} = \Sigma S_i = \Sigma (p_i \ x \ d_i)$$

wherein $V_{\text{3D-bead}}$ = volume of 3D bead 96, $S_{\text{3D-bead}}$ = surface of 3D bead 96, A = 2D surface area of the 2D bead slice 94 (reference numeral 102 in figure 12), d = distance between two adjacent 2D bead slices 94 (= slice thickness, reference numeral 98 in figure 11), p = perimeter of 2D bead slice 94 (reference numeral 100 in figure 12), and i = denominator of each slice of the plurality of slices.

The principle of the present measurement is described as follows:

PROCEDURE

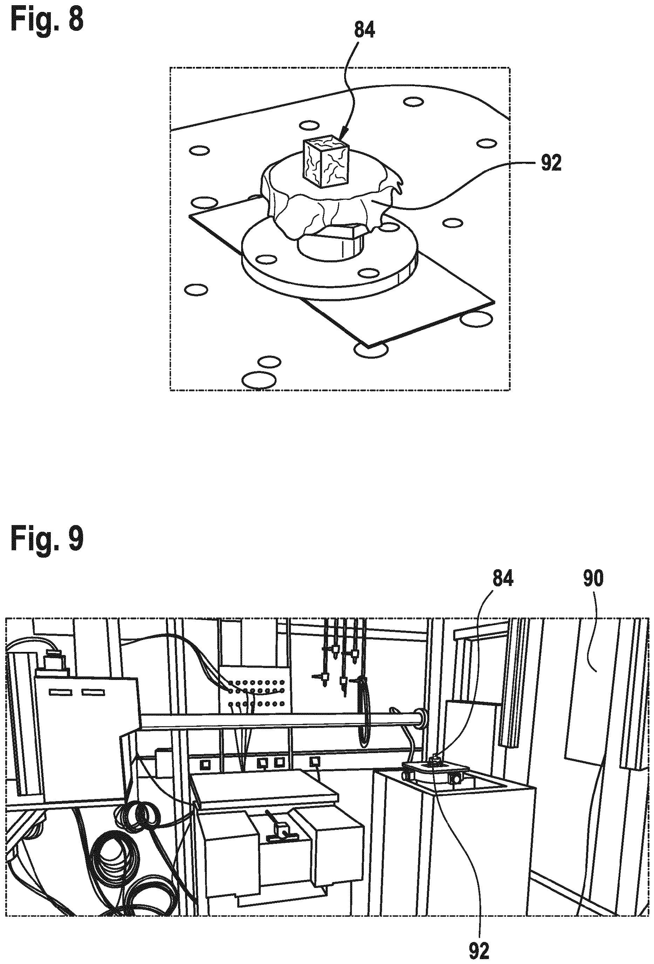

In the present exemplary embodiment, a synchrotron source was used. The sample 84 is placed on a rotatable support 92 between an X ray source 88 and a sensor 90, see also figures 8 and 9. All acquisition parameters are adjusted to obtain the best image resolution. In the present exemplary embodiment, the following parameters were applied:

Pixel Size = 2.9907 $\mu$m
Energy = 78 keV
Sample camera distance = 2.43263 m
Number of radios = 2999 radios
ct = 0.01s (ct = counting time to take each radiography, no accumulation)
ROIX, ROIY = 2048, 2048 (number of pixels in x and y direction)

Different scans were performed under different sample angles.

ASSESSMENT PROGRAM: IMAGE J

To measure the different surface areas of the beads, the program "Image J" was used. It is an open source image processing program designed for scientific multidimensional images. Image J can calculate area and pixel value statistics of user-defined selections and intensity objects. It can measure distances and angles.

For each 2D image (bead slice) 94 the surface A (reference numeral 102) and perimeter p (reference numeral 100) of the bead 96 is measured.

PROTOCOLE WITH IMAGE J

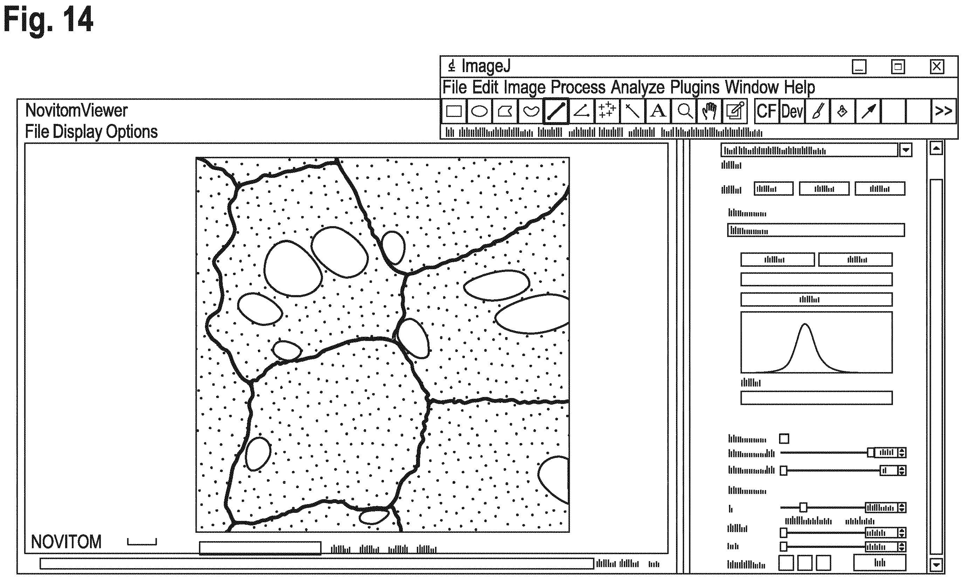

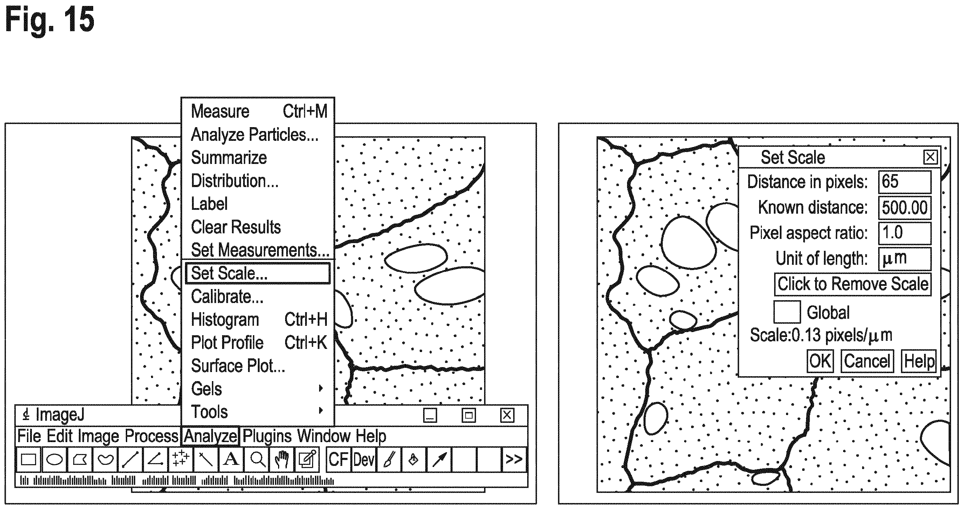

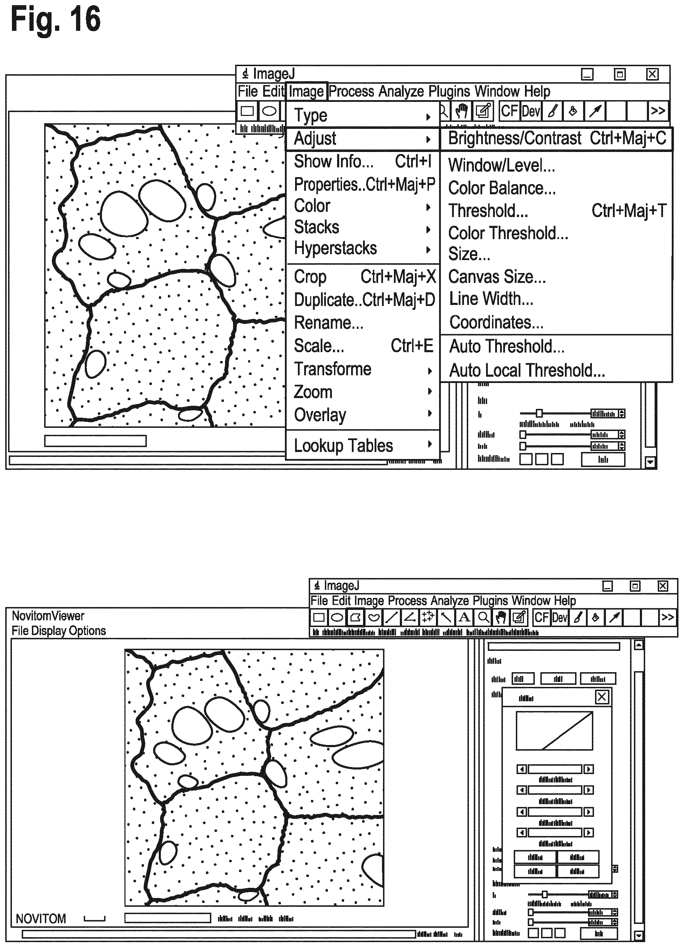

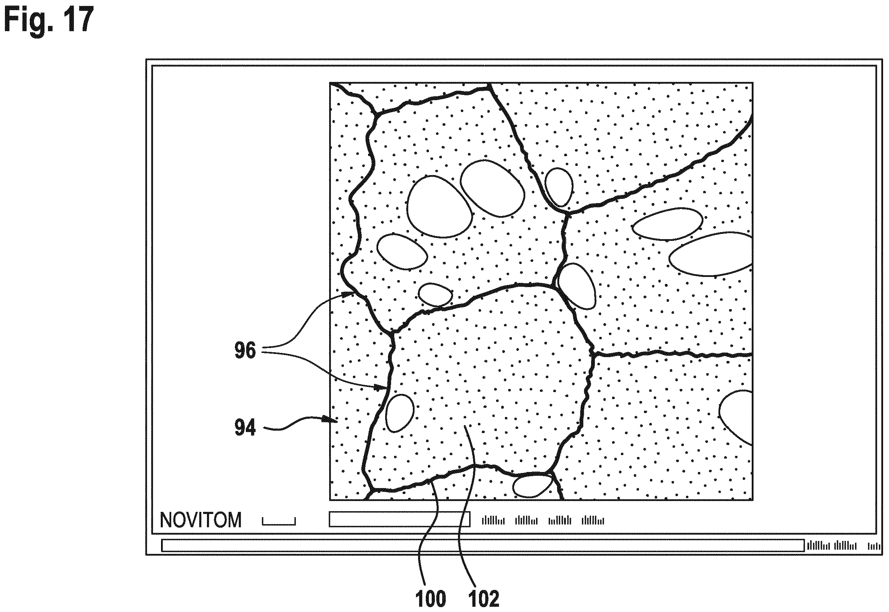

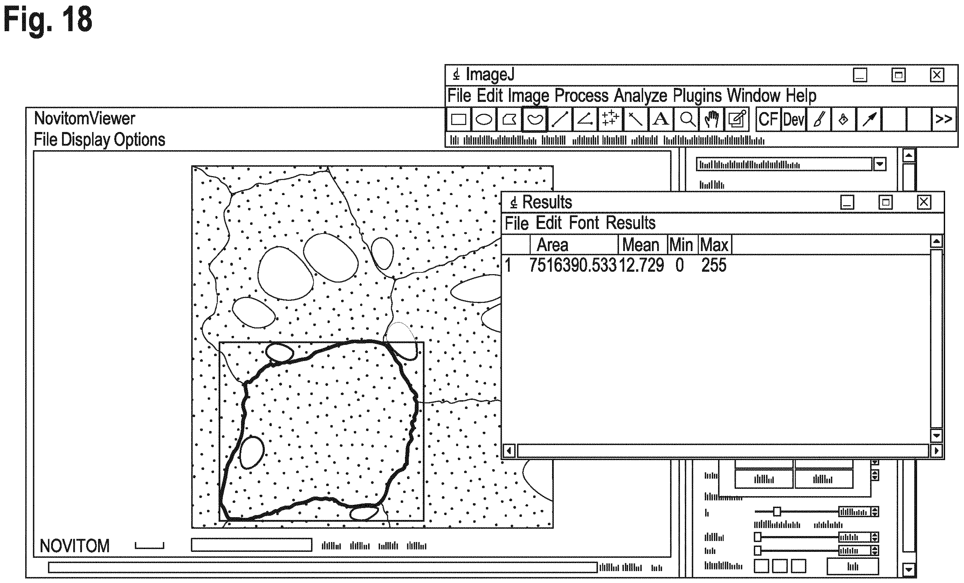

In the program, the image that will be analyzed is opened (see figure 14). A line of a known distance is traced and the scale, in the present exemplary case 500 $\mu$m, is set (figure 15). This is a sort of calibration, since the total size of the scan is known. The brightness and contrast of the image is adjusted in order to better visualize the beads (figure 16). With the Polygon section tool or the Freehand section tool, the perimeter 100 of the bead is traced by hand to be as close as possible to the perimeter of the scan (figure 17). The measurement is then plotted (figure 18), which means that after completion and closure of the perimeter, the program outputs the length of the perimeter p (reference numeral 100) and the 2D surface area A (reference numeral 102) enclosed by the perimeter 100. This is repeated for every 2D-slice 94 of the plurality of 2D-sclices 94. Thereafter, the isoperimetric quotient is calculated based on the above mentioned formula which is also represented further below.

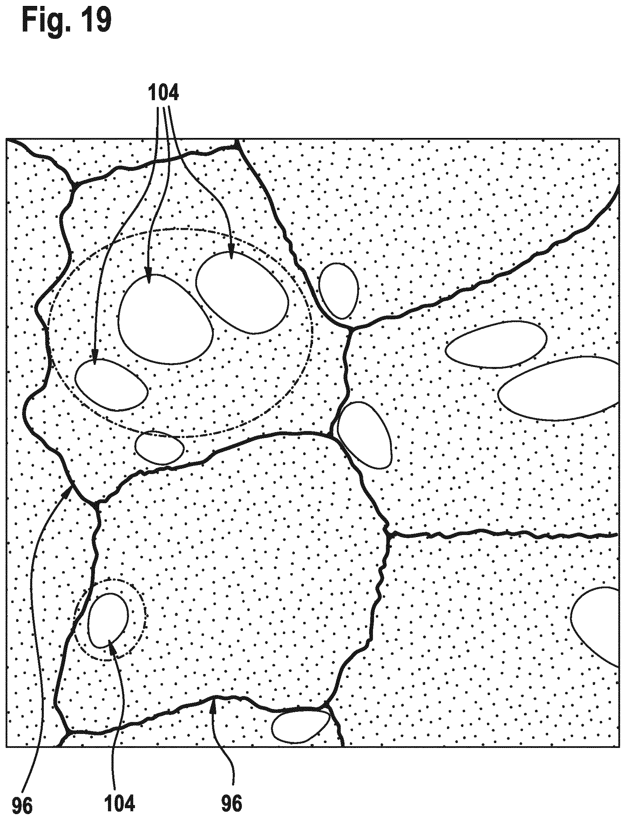

Since rEPS is a recycled expanded polystyrene, some cavities 104 are present in the beads (figure 19). These cavities are not taken into account for the calculation because they do not play a role in the improvement of cohesion between beads (the principle of the invention).

Measurements were performed for several beads 96 from several samples 84.

For a single bead 96, measurements were taken from the database with a step of 10 (every 30$\mu$m), that means depending of the dimensions of the beads 96 from 80 to 130 measurements per bead.

Or, in other words: a particle of 3 mm diameter (maximum extension) is represented by 1000 2D slices, but only every 10th of them is used. By consequence, in order to evaluate a single particle, one must perform the evaluation using the Image J program 100 times. Thus, if the isoperimetric quotients for 20 particles are required, 2000 evaluations have to be performed with the Image J program.

The following numerical values for isoperimetric quotients Q1 (test sample (1) / rEPS) and Q2 (test sample (2) / EPS) of specific beads 96 were obtained with the volumes $V_{\text{3D-bead}}$ and surfaces $S_{\text{3D-bead}}$ and the formula $Q = 36 \ x \ \pi \ (V_{\text{3D-bead}}^2/S_{\text{3D-bead}}^3)$ :

| rEPS Bead sample number | Q1 | EPS Bead sample number | Q2 |
|---|---|---|---|
| 1 | 0,56 | 1 | 0,92 |
| 2 | 0, 60 | 2 | 0,93 |
| 3 | 0, 61 | 3 | 0,92 |
| 4 | 0,62 | 4 | 0,90 |
| 5 | 0, 61 | 5 | 0,91 |
| 6 | 0, 64 | 6 | 0,91 |
| 7 | 0, 60 | 7 | 0,90 |
| 8 | 0,57 | 8 | 0,92 |
| 9 | 0,59 | 9 | 0,91 |
| 10 | 0,62 | 10 | 0,92 |
| 11 | 0,65 | 11 | 0,90 |
| 12 | 0, 67 | 12 | 0,91 |
| 13 | 0, 67 | 13 | 0,90 |
| 14 | 0,73 | 14 | 0,94 |
| 15 | 0,83 | 15 | 0,93 |
| 16 | 0,79 | 16 | 0,92 |
| 17 | 0,80 | 17 | 0,92 |
| 18 | 0,79 | 18 | 0,91 |
| 19 | 0,82 | 19 | 0,90 |
| 20 | 0,75 | 20 | 0,91 |
|  |  |  |  |
| Arithmetic Mean value: | 0,68 |  | 0,91 |

It can be seen that the isoperimetric quotient for the rEPS sample is considerably lower than the isoperimetric quotient for EPS sample. More specifically, the isoperimetric quotient Q1 of rEPS is in the range of 0,56 - 0,83, with an arithmetic mean value of 0,68, whereas the isoperimetric quotient Q2 of EPS is in the range of 0,90 - 0,94, with an arithmetic mean value of 0,91.

## Claims

1. A product at least partially made of an expanded polystyrene material, the material made of extruded expanded polystyrene beads, **characterized in that** an isoperimetric quotient of the expanded polystyrene beads in the material of the product is lower than approx. 0,86.

2. The product of claim 1, wherein the isoperimetric quotient is lower than approx. 0,70.

3. The product of at least one of claims 1-2, wherein an arithmetic mean value of the isoperimetric quotient of a plurality of expanded beads in the material of the product is lower than approx. 0,75, preferably lower than approx. 0,70, more preferably lower than approx. 0,68.

4. The product of at least one of claims 1-3, wherein it is a molded part.

5. The product of at least one of claims 1-4, wherein it is a cushioning element for shipping an item in a container or a part of a shock absorber in an automotive vehicle or a molded construction component.

# Fig. 1

**Fig. 2**

**Fig. 3**

**Fig. 4**

**Fig. 5**

# Fig. 6

# Fig. 7

## Fig. 8

## Fig. 9

Fig. 10

**Fig. 11**

**Fig. 12**

## Fig. 13

Fig. 14

# Fig. 15

Measure    Ctrl+M
Analyze Particles...
Summarize
Distribution...
Label
Clear Results
Set Measurements...
Set Scale...
Calibrate...
Histogram   Ctrl+H
Plot Profile   Ctrl+K
Surface Plot...
Gels
Tools

ImageJ

File Edit Image Process Analyze Plugins Window Help

CF Dev

Set Scale

Distance in pixels: 65
Known distance: 500.00
Pixel aspect ratio: 1.0
Unit of length: μm
Click to Remove Scale
Global
Scale:0.13 pixels/μm

OK Cancel Help

# Fig. 16

Fig. 17

# Fig. 18

EP 4 095 186 A1

## Fig. 19

Europäisches
Patentamt

European
Patent Office

Office européen
des brevets

# EUROPEAN SEARCH REPORT

Application Number

EP 22 17 4906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 197 665 A1 (GURIT UK LTD [GB]) 23 June 2010 (2010-06-23) * paragraphs [0073] – [0079]; figures 4-8 * ----- | 1-5 | INV. C08J9/16 C08J9/232 B29C44/30 |
| X | FR 1 355 871 A (BASF AG) 20 March 1964 (1964-03-20) * examples 4, 16, 17 * ----- | 1-5 | |
| X | FR 1 323 458 A (BASF AG) 5 April 1963 (1963-04-05) * example 1 * ----- | 1-5 | |
| X,D,P | EP 3 825 353 A1 (STOROPACK HANS REICHENECKER GMBH [DE]) 26 May 2021 (2021-05-26) * paragraphs [0012] – [0023], [0040] – [0042] * ----- | 1-5 | |
| | | | TECHNICAL FIELDS SEARCHED (IPC) |
| | | | C08J B29C |

The present search report has been drawn up for all claims

| Place of search | Date of completion of the search | Examiner |
|---|---|---|
| The Hague | 29 September 2022 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 4906

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2022

| Patent document cited in search report | | | Publication date | Patent family member(s) | | | Publication date |
|---|---|---|---|---|---|---|---|
| EP 2197665 | A1 | | 23-06-2010 | AU | 2008309395 | A1 | 16-04-2009 |
| | | | | BR | PI0818281 | A2 | 14-04-2015 |
| | | | | CA | 2701376 | A1 | 16-04-2009 |
| | | | | CN | 101842230 | A | 22-09-2010 |
| | | | | EP | 2197665 | A1 | 23-06-2010 |
| | | | | GB | 2448468 | A | 22-10-2008 |
| | | | | US | 2010261000 | A1 | 14-10-2010 |
| | | | | WO | 2009047483 | A1 | 16-04-2009 |
| FR 1355871 | A | | 20-03-1964 | NONE | | | |
| FR 1323458 | A | | 05-04-1963 | NONE | | | |
| EP 3825353 | A1 | | 26-05-2021 | NONE | | | |

EPO FORM P0459

For more details about this annex : see Official Journal of the European Patent Office, No. 12/82

**EP 4 095 186 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2241590 B1
- EP 3825353 A1

- EP 1416031 B1